# EUROPÄISCHE PATENTSCHRIFT

(11) **EP 2 639 935 B1**
(45) Veröffentlichungstag und Bekanntmachung des Hinweises auf die Patenterteilung: **26.11.2014**
(21) Anmeldenummer: 12159917.9
(22) Anmeldetag: 16.03.2012
(51) Int. Cl.: H02K 1/27, H02K 15/03

(54) **Rotor mit Permanenterregung, elektrische Maschine mit einem solchen Rotor und Herstellungsverfahren für den Rotor**
Rotor with permanent excitation, electrical machine with such a rotor and method for producing the rotor
Rotor à excitation permanente, machine électrique dotée d'un tel rotor et procédé de fabrication du rotor

(43) Veröffentlichungstag der Anmeldung: 18.09.2013
(73) Patentinhaber: Siemens Aktiengesellschaft, 80333 München (DE)
(72) Erfinder: Mader, Daniel, 97616 Bad Neustadt a.d. Saale (DE); Vollmer, Rolf, 36129 Gersfeld (DE)

(56) Entgegenhaltungen:
- EP-A2- 2 485 371
- WO-A1-2011/076740
- JP-A- 58 099 253
- JP-A- 2008 236 895
- NL-A- 275 202
- US-A1- 2007 267 930
- US-B1- 6 703 741

## Beschreibung

Die Erfindung betrifft einen Rotor, bei welchem für eine Permanenterregung eine Mehrzahl von Permanentmagneten um eine Welle des Rotors in Umfangsrichtung angeordnet ist. Zum Führen eines magnetischen Flusses der Permanentmagneten ist bei dem Rotor eine Flussleiteinrichtung vorgesehen. Zu der Erfindung gehören auch eine elektrische Maschine mit einem solchen Rotor sowie ein Verfahren zum Herstellen eines Rotors mit Permanenterregung. Der erfindungsgemäße Rotor und entsprechend auch die erfindungsgemäße Maschine eignen sich insbesondere zum Bereitstellen eines elektrischen Antriebs eines Elektrofahrzeugs.

Bei Rotoren der genannten Art kann vorgesehen sein, als die Flussleiteinrichtung einen weichmagnetischen Grundkörper aus Blechen zu bilden. Diese sind dann zu einem Blechpaket aufgeschichtet, wobei zwischen den einzelnen Blechen eine elektrisch isolierende Schicht zum Vermeiden von Wirbelströme vorgesehen ist. In den einzelnen Blechen ist ein Loch in deren Mitte ausgestanzt, so dass das Blechpaket nach seiner Fertigstellung eine Durchgangsöffnung aufweist, durch welche die Welle des Rotors gesteckt wird. Das Blechpaket kann so durch eine Presspassung mit der Welle verbunden werden. Des Weiteren sind in den Blechen auch Aussparungen an deren äußeren Rand ausgestanzt, so dass sich im fertigen Blechpaket in Umfangsrichtung Taschen ergeben, in welche Permanentmagneten für eine Permanenterregung des Rotors eingebettet werden können. Mit Umfangsrichtung ist hierbei und im Folgenden die übliche Bezeichnung gemeint, d.h. bezogen auf eine Rotationsachse des Rotors liegen die Richtungsvektoren der Umfangsrichtung in einer Ebene senkrecht zur Rotationsachse des Rotors und sind tangential an einem Kreis um die Rotationsachse in dieser Ebene ausgerichtet.

In dem Dokument JP 58 099253 A ist ein Rotor beschrieben, bei welchem sowohl Permanentmagneten als auch zwischen diesen angeordnete Flussleitelemente an einer Welle des Rotors durch Löten, Schrauben oder Kleben befestigt sind.

In dem Dokument WO 2011/076740 A1 ist ein Außenrotor beschrieben, bei dem Permanentmagneten und Flussleitelemente im Inneren einer Röhre ineinander verkeilt angeordnet sind.

In dem Dokument EP 2 485 371 A2 ist ein Rotor mit sternförmig an einer Welle angeordneten Permanentmagneten beschrieben. Zwischen den Permanentmagneten können keilförmige Flussleitelemente eingeklebt sein. Die Flussleitelemente sind über Stäbe mit axialen Endplatten des Rotors verbunden.

In dem Dokument JP 2008 236895 A ist ein Rotor mit einem weichmagnetischen Kern beschrieben. Der weist im Querschnitt die Form eines Oktaeders auf. Auf die ebenen Flächen der Oktaeder-Form sind lackierte Permanentmagneten aufgeklebt.

In dem Dokument US 6 703 741 B1 ist ein Rotor mit sternförmig angeordneten Permanentmagneten beschrieben, zwischen denen sich Flussleitelemente befinden, durch welche die Permanentmagneten beabstandet sind. Hierzu reichen die Permanentmagneten bis an die Welle des Rotors heran.

In dem Dokument NL 275 202 A ist ein Rotor mit axialen Endplatten beschrieben.

In dem Dokument US 2007/267930 A1 ist ein Rotor beschrieben, bei dem Magneten und Flussleitelemente mittels Bändern und/oder axialen Endplatten gegeneinander fixiert sein können.

Eine Aufgabe der Erfindung besteht darin, eine robuste und dennoch einfach und kostengünstig herzustellende elektrische Maschine bereitzustellen.

Die Aufgabe wird durch einen Rotor gemäß Patentanspruch 1, eine elektrische Maschine gemäß Patentanspruch 13 und ein Verfahren gemäß Patentanspruch 14 gelöst. Vorteilhafte Weiterbildungen der Erfindung sind durch die Unteransprüche gegeben.

Der erfindungsgemäße Rotor weist wie der bereits beschriebene Rotor aus dem Stand der Technik eine Mehrzahl von Permanentmagneten auf, die um eine Welle des Rotors in Umfangsrichtung angeordnet sind. Die Permanentmagneten sind hierbei nun aber an der Welle selbst befestigt, d.h. sie sind nicht in Taschen eines weichmagnetischen Blechpakets untergebracht. Hierbei werden sie durch eine Klebeverbindung an der Welle gehalten. Zum Führen des magnetischen Flusses der Permanentmagneten ist wie beim Stand der Technik ebenfalls eine Flussleiteinrichtung vorgesehen. Bei dem erfindungsgemäßen Rotor umfasst diese allerdings eine Mehrzahl von separaten, weichmagnetischen Flussleitelementen, also etwa einzelne Blechpakete, die jeweils ein Segment des Rotors bilden. Die einzelnen Flussleitelemente sind jeweils zwischen zwei der Permanentmagneten an diesen befestigt. Auch diese Befestigung ist als eine Klebeverbindung realisiert.

Der erfindungsgemäße Rotor weist den Vorteil auf, dass er sich sehr einfach um die Welle herum aufbauen lässt, indem zunächst die Permanentmagneten an der Welle des Rotors angeklebt werden, anschließend die Flussleitelemente in den Zwischenräumen zwischen den Permanentmagneten angeordnet und dann mit den Permanentmagneten verklebt werden.

Auf der Grundlage des erfindungsgemäßen Rotors lässt sich entsprechend auch besonders kostengünstig eine permanenterregte elektrische Maschine bereitstellen. Besonders geeignet ist der erfindungsgemäße Rotor zum Herstellen einer Synchronmaschine, eines Servomotors und eines Schrittmotors.

Der Begriff Welle bezeichnet im Zusammenhang mit der Erfindung den gesamten inneren Bereich des Rotors, welcher nicht in signifikanter Weise ein magnetisch aktives Teil für die Erzeugung eines Drehmoments zum Antreiben des Rotors bzw. (im Falle eines Generators) zum Erzeugen von elektrischer Spannung bildet. Mit anderen Worten ist die Welle derjenige Teil des Rotors, welcher nur tragende Funktion hat und für die mechanische Übertragung eines Drehmoments dient. Im Gegensatz dazu ist der magnetisch aktive Teil durch die Permanentmagneten und die Flussleitelemente gebildet. Die Welle kann also eine Stange aus beispielsweise Stahl sein oder aber auch ein hohlzylindrischer Körper (Hohlwelle). Die Welle kann zur Vergrößerung eines Außenumfangs des Rotors im Bereich der Permanentmagneten auch z.B. Speichen und einen von den Speichen getragenen Ring umfassen, an welchem dann die Permanentmagneten befestigt sind.

Wie bereits beschrieben werden die Flussleitelemente durch eine Klebeverbindung an den Permanentmagneten gehalten. Hierbei sind die Flussleitelemente in der Weise ausgestaltet, dass sie nicht selbst an der Welle anliegen, sondern nur mittelbar über die Permanentmagneten an der Welle gehalten sind. Es ergibt sich der Vorteil, dass durch Anpressen der Flussleitelemente radial nach innen zur Welle hin auch die Permanentmagneten von jeweils zwei Flussleitelementen zur Welle hin gedrückt werden und hierdurch ein besonders fester Sitz der Permanentmagneten und Flussleitelemente im Rotor erreicht wird. Die Anpresskraft kann hierbei beispielsweise durch Schellen erzeugt werden.

Eine weitere Möglichkeit, um den magnetisch aktiven Teil des Rotors, d. h. das Paket aus Permanentmagneten und Flussleitelementen, gegen Fliehkräfte zu stabilisieren, ist bei dem erfindungsgemäßen Rotor durch Bandagen gegeben, die an radial außen liegenden Oberflächen der Flussleitelemente angeordnet sind. Bei solchen Bandagen kann es sich beispielsweise um ein harzgetränktes Glasfasergewebe oder -gewirke handeln. Nach Aushärten der Bandagen bilden diese ein den magnetisch aktiven Teil kapselndes Gehäuseelement zur Stabilisierung des Rotors gegen Fliehkräfte.

Eine besonders bevorzugte Ausführungsform des Rotors ergibt sich, wenn als Flussleitelemente keilförmige Elemente verwendet werden, also Segmente mit einem Kreissektor als Grundfläche, die sich entlang der Rotationsachse des Rotors erstrecken. Diese Ausführungsform des Rotors weist dann insgesamt einen Querschnitt auf, in welchem die Permanentmagneten sternförmig an der Welle angeordnet und die keilförmigen Flussleitelemente zwischen den Permanentmagneten befestigt sind. Dieser beschriebene Querschnitt ist dabei senkrecht zur Rotationsachse gebildet. Der sich so ergebende Rotor ist sehr robust und dennoch besonders einfach zu fertigen.

In Bezug auf die Permanentmagneten selbst, können diese beispielsweise Seltenerdmagneten sein. Bevorzugt handelt sich bei den Permanentmagneten aber um Ferritmagneten, die bedeutend günstiger als die erstgenannten sind. Ferritmagneten weisen allerdings auch eine deutlich geringere Magnetfeldstärke auf. Bei dem erfindungsgemäßen Rotor stellt dies allerdings kein Problem dar: Das magnetische Feld von Ferritmagneten lässt sich hier soweit konzentrieren, dass in einem Luftspalt zwischen dem Rotor und einem Stator einer elektrischen Maschine ein Magnetfeld mit der für permanenterregte elektrische Maschinen üblichen Feldstärke erzeugt werden kann. Hierzu müssen die Magnetisierungen der Permanentmagneten lediglich in Umfangsrichtung weisen, also nicht radial von der Welle weg, sondern tangential zum Umfang der Welle. Die zwischen den Permanentmagneten befindlichen Flussleitelemente sorgen dann dafür, dass die Magnetfeldlinien in radialer Richtung nach außen hin umgelenkt und radial aus dem Rotor an dessen Außenumfang austreten. Durch das Umlenken findet dabei eine Flusskonzentration statt, so dass das Feld der Ferritmagneten aufkonzentriert im Luftspalt stärker ist als an der Oberfläche der Ferritmagneten selbst. Natürlich lassen sich hierbei auch Seltenerdmagneten verwenden, so dass ein noch stärkeres magnetisches Feld erzeugbar ist. Eine noch größere Flusskonzentration kann erreicht werden, wenn die Magnetisierungen zweier benachbarter Permanentmagneten entgegengesetzt zueinander ausgerichtet sind.

Die Klebeschicht zwischen den Flusselementen und den Permanentmagneten weist bevorzugt jeweils eine Dicke in einem Bereich von 0,05 Millimeter bis 0,25 Millimeter auf. Hierdurch ergibt sich zwischen den Permanentmagneten und den Flussleitelementen ein derart geringer magnetischer Widerstand, dass das magnetische Feld durch Verwendung der Klebeverbindung nur unwesentlich geschwächt wird.

Bei elektrischen Maschinen ist man zusätzlich auch bestrebt, dass in dem Luftspalt zwischen Rotor und Stator ein magnetisches Feld zu erzeugen, dessen Feldstärke in Umfangsrichtung um den Rotor sinusförmig verläuft. Dies kann bei dem erfindungsgemäßen Rotor durch eine ganz bestimmte Ausgestaltung der äußeren Oberfläche der Flussleitelemente erreicht werden, also derjenigen Oberfläche eines jeden Flussleitelements, welche dieses (bezogen auf die Welle) in radialer Richtung nach außen zum Rotoräußeren hin begrenzt. Diese Oberfläche weist bevorzugt in Umfangsrichtung des Rotors eine Krümmung mit einem Krümmungsradius auf, der kleiner als ein Hüllkreisradius eines Hüllkreises ist, welcher den maximalen Außenumfang des Rotors in Umfangsrichtung beschreibt. Für eine Veranschaulichung dieser beiden Radien sei auf die noch folgende Beschreibung der Figuren verwiesen. Hier sei noch angemerkt, dass der Krümmungsradius insbesondere in einem Bereich zwischen 50 und 100 Prozent des Hüllkreisradius liegt.

Damit der Rotor in einem magnetischen Drehfeld möglichst gleichmäßig läuft, sollte hierbei der jeweils in radialer Richtung äußerste Punkt eines Flussleitelements in einem Abstand zur Rotationsachse des Rotors angeordnet sein, welcher dem Radius des Hüllkreises entspricht, d. h. sämtliche äußeren Punkte aller Flussleitelemente sollten auf demselben Hüllkreis liegen. Um dies sicherzustellen und hierbei dennoch eine einfache Montage zu ermöglichen, sieht eine Ausführungsform des erfindungsgemäßen Rotors vor, dass ein Flussleitelement die Permanentmagneten, zwischen denen es angeordnet ist, radial überdeckt, d.h. auf einer Kante der Permanentmagneten aufliegt. In dem sich so ergebenden Überdeckungsbereich ist dabei keine Klebeschicht vorgesehen, sodass das Flussleitelement den Permanentmagneten berührt. Hierdurch ergibt sich ein definierter Kontakt und es müssen bei der Fertigung des Rotors nur sehr geringe Toleranzen aufgrund einer variablen Schichtdicke einer Klebeverbindung in diesem Bereich in Kauf genommen werden. Mit anderen Worten ist vorzugsweise keine Klebeschicht vorgesehen. Fertigungstechnisch lässt sich eine solche aber nicht immer vermeiden, wenn z.B. Klebstoffreste mit einer vernachlässigbaren Dicke vorhanden sind. Entscheidend ist jedoch ein definiertes Spaltmaß im Auflagebereich. So kann z.B. auch eine Klebeschicht vorgesehen sein, deren Dicke z.B. mittels im Kleber integrierter Abstandskörper (Spacer) auf z.B. 0,1 mm plus/minus 0,025 mm eingestellt sein kann.

Um eine Fertigungstoleranz beim Ausrichten der Flussleitelemente bezüglich des Hüllkreises noch weiter zu verringern, weisen die Klebeverbindungen der Permanentmagneten an der Welle in radialer Richtung bevorzugt eine Dicke auf, die jeweils kleiner als 0,5 Millimeter ist und bevorzugt ein Toleranzfeld von weniger als 0,06 mm aufweist. Die Toleranz der Klebeschichtdicke kann z.B. mit Hilfe der beschriebenen Abstandskörper sichergestellt werden. Technisch gesehen ist für eine sehr genaue Ausrichtung der an die Permanentmagneten angeklebten Flussleitelemente bezüglich des Hüllkreises das sich ergebende geringe Toleranzfeld entscheidend, also die definierte Spaltbreite, und nicht die absolute Dicke.

Der Rotor kann gemäß einer vorteilhaften Weiterbildung an zumindest einer Stirnseite eine mit Laschen versehene Endscheibe aufweisen, welche die Welle umgibt, d.h. die z.B. auf die Welle aufgesteckt ist. Durch die Laschen ist die Endscheibe dann jeweils kraftschlüssig an einem Permanentmagneten gehalten, indem die Laschen eine Klammerwirkung auf die Permanentmagneten ausüben. Eine Endscheibe kann alternativ beispielsweise auch an der Stirnseite des Pakets aus Permanentmagneten und Flussleitelementen angeklebt sein. Die Endscheibe kann in vorteilhafter Weise dazu genutzt werden, eine Wuchtmasse an dem Rotor zu befestigen.

Bei dem erfindungsgemäßen Rotor lassen sich Endscheiben und Bandagen in der Weise vorteilhaft kombinieren, indem ein Durchmesser der Endscheibe kleiner als ein Durchmesser des magnetisch aktiven Teils, also des Pakets aus Flussleitelementen und Permanentmagneten, gewählt wird und die Bandagen an den Endscheiben befestigt werden. Durch Spannen der Bandagen lässt sich hierbei eine Anpresskraft auf die Flussleitelemente ausüben.

Um mittels des Rotors ein ausreichend starkes magnetisches Feld in einem Luftspalt zwischen dem Rotor und einem Stator einer elektrischen Maschine erzeugen zu können, weist der Ro-tor bevorzugt mehr als sechs Pole auf, wobei es sich bei den Polen um diejenige handelt, die an der Außenseite des Rotors ausgebildet sind, also an den Außenflächen des Rotors im Bereich der Flussleitelemente.

Die im Zusammenhang mit dem erfindungsgemäßen Rotor beschriebenen Weiterbildungen stellen auch Weiterbildungen der erfindungsgemäßen elektrischen Maschine dar. Ebenso umfasst die Erfindung auch Weiterbildungen des erfindungsgemäßen Verfahrens zum Herstellen des Rotors, die Merkmale umfassen, die hier im Zusammenhang mit Weiterbildungen des erfindungsgemäßen Rotors selbst beschrieben wurden, wie etwa das Tränken der Bandagen mit Harz und dergleichen. Um Wiederholungen zu vermeiden, werden diese Merkmale hier nicht noch einmal im Zusammenhang mit der erfindungsgemäßen elektrischen Maschine und dem erfindungsgemäßen Verfahren beschrieben.

Im Folgenden wird die Erfindung noch einmal konkreter anhand von Ausführungsbeispielen erläutert. Dazu zeigt:
- FIG 1: eine schematische Darstellung einer Ausführungsform des erfindungsgemäßen Rotors im Querschnitt;
- FIG 2: eine schematische Darstellung von Permanentmagneten, die von Flussleitelementen in einer radialen Richtung abgedeckt sind, wie es bei dem Rotor von FIG 1 vorgesehen sein kann,
- FIG 3: eine schematische Darstellung eines Längsschnitts einer weiteren Ausführungsform des erfindungsgemäßen Rotors in perspektivischer Ansicht und
- FIG 4: eine schematische Darstellung von Bandagen bei einer Ausführungsform des erfindungsgemäßen Rotors im Längsschnitt.

Die Beispiele stellen bevorzugte Ausführungsformen der Erfindung dar.

Bei dem im Folgenden erläuterten Beispiel stellen die beschriebenen Komponenten des Rotors jeweils einzelne, unabhängig voneinander zu betrachtende Merkmale des Rotors dar, welche den Rotor jeweils auch unabhängig voneinander weiterbilden und damit auch einzeln oder in einer anderen als der gezeigten Kombination als Bestandteil der Erfindung anzusehen sind.

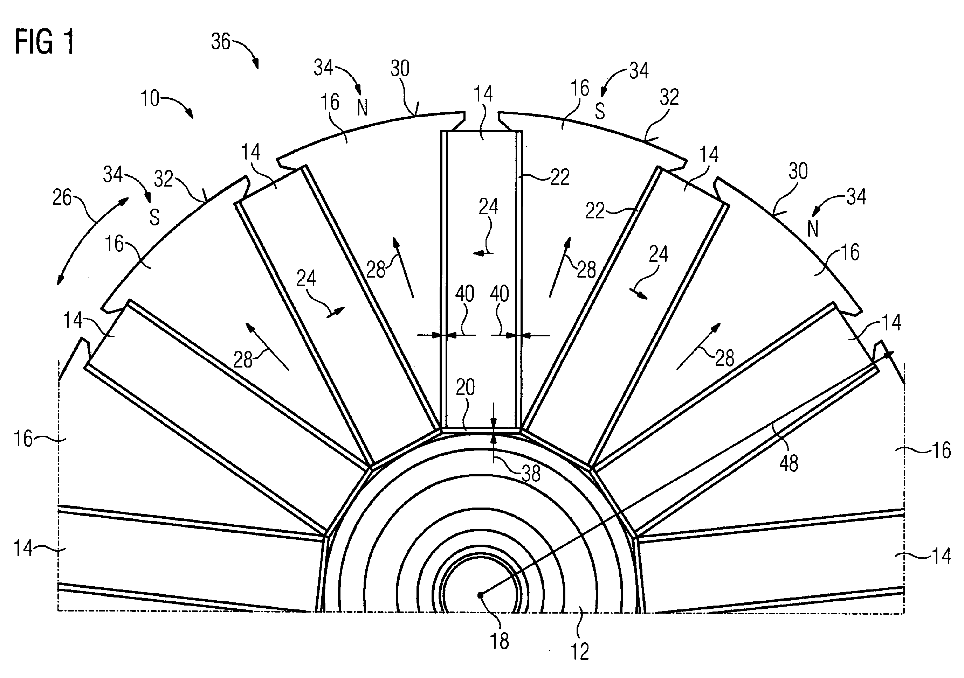

FIG 1 zeigt einen Querschnitt eines Rotors 10, bei welchem an einer Welle 12 Permanentmagneten 14 befestigt sind, zwischen denen jeweils Flussleitelemente 16 eingefügt sind. Von dem Rotor 10 ist in FIG 1 nur ein Ausschnitt gezeigt, wie durch Bruchlinien angedeutet ist. Der Rotor 10 kann in einer elektrischen Maschine eingebaut sein, beispielsweise einer Synchronmaschine oder einem Servomotor. Die elektrische Maschine kann beispielsweise ein Antrieb für ein Elektrofahrzeug sein.

Eine Rotationsachse 18 des Rotors 10 verläuft senkrecht zur Bildebene von FIG 1. Der Rotor 10 weist insgesamt eine zylinderförmige Grundform auf, wobei die Zylinderachse mit der Rotorachse 18 zusammenfällt. Die Welle 12 kann in dem gezeigten Beispiel aus einem massiven Körper aus Stahl gebildet sein. Die Permanentmagneten 14 können eine längliche, quaderförmige Grundform aufweisen, wobei die Längserstreckung parallel zur Rotationsachse 18 verläuft. Genauso handelt es sich bei den Flussleitelementen 16 um längliche Körper, die jeweils als Grundform diejenige eines Zylindersegments aufweisen, wobei Körper mit ihrer Längserstreckung ebenfalls parallel zur Rotationsachse 18 ausgerichtet sind. Insgesamt sind die Permanentmagneten 14 in dem in FIG 1 gezeigten, senkrecht zur Rotationsachse 18 gebildeten Querschnitt sternförmig an der Welle 12 angeordnet. Die Flussleitelemente 16 weisen in dem Querschnitt eine Keilform auf und sind zwischen den Permanentmagneten 14 angeordnet.

Bei den Permanentmagneten 14 kann es sich um keramische Magneten, beispielsweise um Ferritmagneten handeln. Die Permanentmagneten 14 sind jeweils durch eine Klebeverbindung 20 an der Welle 12 befestigt. In FIG 1 ist der Übersichtlichkeit halber lediglich für einen der Permanentmagneten 14 die Lage der Klebeverbindung 20 gezeigt. Bei den Permanentmagneten 14 weist eine jeweilige Magnetisierung 24 entlang einer Umfangsrichtung 26 (die Umfangsrichtung 26 hier durch einen Doppelpfeil angezeigt, da die Orientierung hier keine Rolle spielt). Das von den Permanentmagneten 14 erzeugte magnetische Feld wird durch die Flussleitelemente 16 in eine radiale Richtung 28 nach außen hin umgeleitet und hierbei konzentriert.

Die Flussleitelemente 16 sind hierzu aus einem weichmagnetischen Material gefertigt. Sie können beispielsweise jeweils durch ein Blechpaket gebildet sein. Die Flussleitelemente 16 sind nicht unmittelbar an der Welle 12 befestigt. Jedes Flussleitelement 16 ist durch eine Klebeverbindung 22 an denjenigen Permanentmagneten 14 fixiert, zwischen denen es sich befindet. Auch von den Klebeverbindungen 22 ist in FIG 1 der Übersichtlichkeit halber lediglich die Klebeverbindungen 22 für ein Flussleitelement 16 mit einem Bezugszeichen versehen.

Durch die Flussleitelemente 16 wird der aus den Permanentmagneten 14 an deren Nordpolen austretende magnetische Fluss in einer radialen Richtung 28 radial nach außen zu einer außen liegenden Oberfläche 30 der entsprechenden Flussleitelemente 16 geführt. Über weitere Flussleitelemente 16 tritt dann der magnetische Fluss durch Oberflächen 32 weiterer Flussleitelemente 16 wieder in den Rotor ein und wird an der Südpol-Seite der Permanentmagneten 14 wieder zu diesem zurückgeführt. Insgesamt entstehen so magnetische Pole 34 an der Außenseite des Rotors 10 entlang von dessen Umfang 26. Die Anzahl der Pole 34 ist bevorzugt größer als sechs.

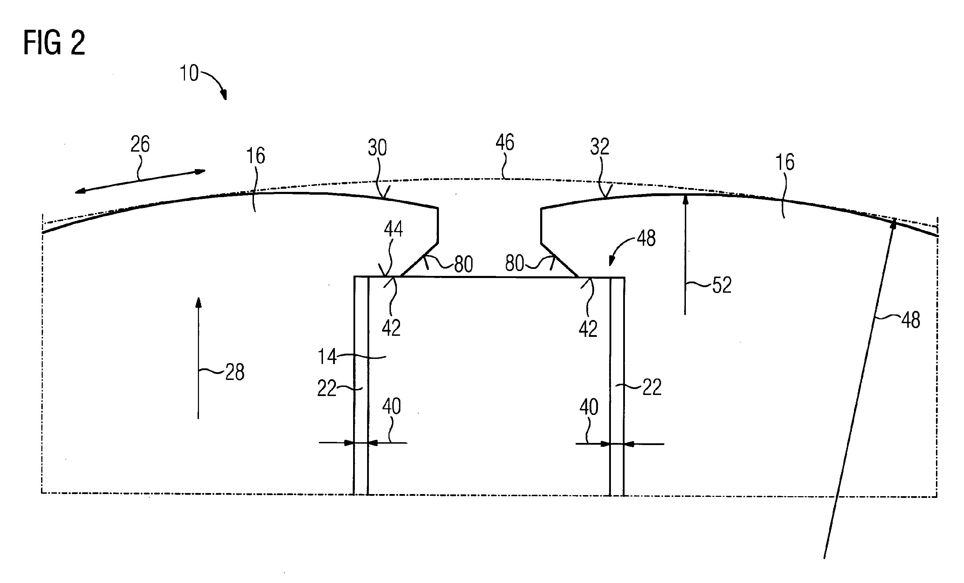

Im Folgenden ist im Zusammenhang mit FIG 1 und FIG 2 erläutert, wie das magnetisch aktive Paket 36, das aus den Permanentmagneten 14 und den Flussleitelementen 16 besteht, bei der Herstellung des Rotors 10 um die Welle 12 herum aufgebaut wurde. In einem ersten Arbeitsschritt wurden die Permanentmagneten 14 auf die Welle geklebt. Die so entstehenden Klebeverbindungen 20 sind so dünn, dass der Abstand 38 der Permanentmagneten 14 zur Welle ein geringes Toleranzfeld von weniger als 0,06 mm aufweist. In FIG 1 ist der Übersichtlichkeit halber nur ein Abstand 38 kenntlich gemacht. In einem zweiten Arbeitsschritt wurden die weichmagnetischen Flussleitstücke oder Flussleitelemente 16 zwischen die Permanentmagneten 14 geklebt. Die Klebeschicht 22 hat hierbei bevorzugt eine Dicke 40 in einem Bereich von 0,05 Millimetern bis 0,25 Millimetern. Die Flussleitelemente 16 überdecken den jeweils angrenzenden Permanentmagneten 14 in radialer Richtung 28, d. h. die Flussleitelemente 16 liegen mit Auflageflächen 42 auf einer radial nach außen weisenden Außenfläche 44 des Permanentmagneten 14 auf. Zwischen der Außenfläche 44 und den Auflageflächen 42 befindet sich bevorzugt kein Klebstoff. Hierdurch haben die Flussleitelemente 16 einen definierten Kontakt mit den Permanentmagneten 14. Die Klebeschicht 22 befindet sich lediglich in Umfangsrichtung 26 zwischen den Flussleitelementen 16 und den Permanentmagneten 14.

Die Flussleitelemente 16 berühren mit ihrem in radialer Richtung 28 äußersten Punkt einen Hüllkreis 46. Der Hüllkreis 46 beschreibt den maximalen Außenumfang des Rotors 10 bezüglich der Rotationsachse 18, wobei der Hüllkreis 46 mit einem Radius 48 um die Rotationsachse 18 verläuft. Die radial äußeren Oberflächen 30, 32 der Flussleitelemente 16 sind entlang des Umfangs 46 gekrümmt, wobei ein Krümmungsradius 52 kleiner als der Hüllkreisradius 48 ist. Deshalb tangieren die Flussleitelemente den Hüllkreis 46 nur. Wegen der Krümmung der Außenoberflächen 30, 32 verläuft eine Feldstärke der Pole 34 entlang des Umfangs 26 nahezu sinusförmig.

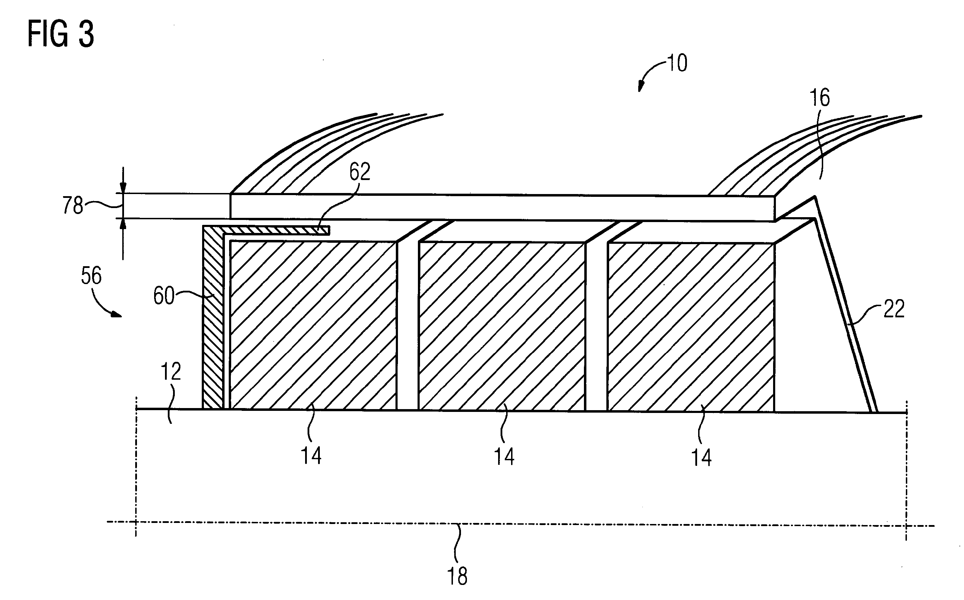

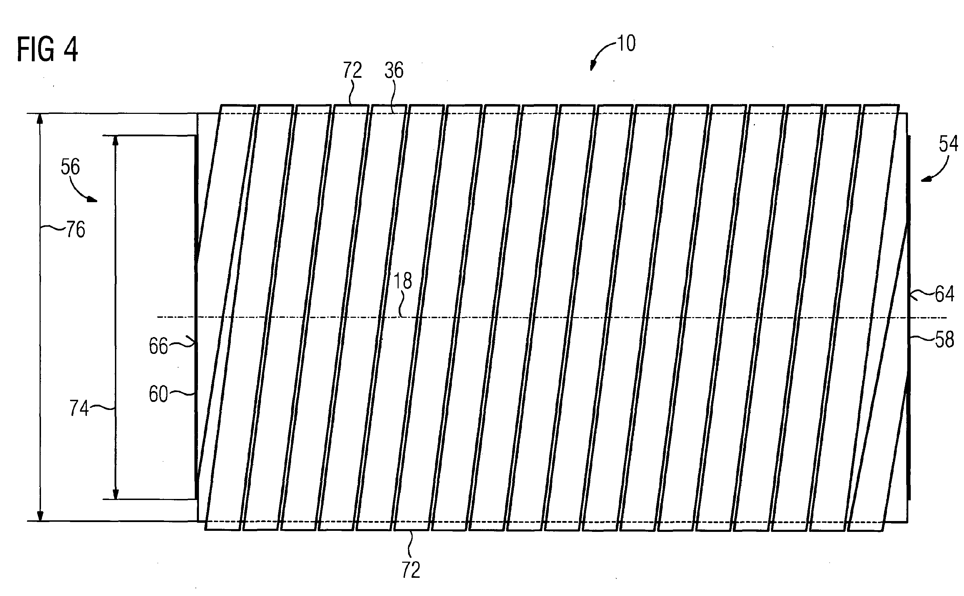

Die weiteren Fertigungsschritte für den Rotor 10 sind im Folgenden anhand von FIG 3 und FIG 4 näher erläutert. In FIG 3 ist hierzu auch gezeigt, dass der Rotor 10 zum Ausbilden eines bestimmten Pols 34 auch mehrere axial in einer Reihe angeordnete Permanentmagnete aufweisen kann.

In einem weiteren Fertigungsschritt können an Stirnseiten 54, 56 des Rotors Endscheiben 58, 60 axial vor das Paket 36 auf die Welle 12 aufgeschoben werden. Die ringförmigen Abschlussflächen 64, 66 sind nach dem Aufschieben der Endscheiben 58, 60 auf die Welle 12 konzentrisch zum Hüllkreis 46 angeordnet. Die Endscheiben 58, 60 können hierbei in einer Ausführungsform an das Paket 36 angeklebt sein. In einer weiteren Ausführungsform können die Endscheiben 58, 60 axial abstehende Laschen 62 aufweisen, über welche die Endscheiben 58, 60 mittels eines Presssitzes auf die axial außen befindlichen Permanentmagneten 14 aufgeschoben sind. Durch die Endscheiben 58, 60 ist an den Stirnseiten 54, 56 des Rotors 10 jeweils eine ringförmige, um die Welle 12 umlaufende Abschlussfläche 64, 66 gebildet. An diesen Abschlussflächen 64, 66 können Bandagen 72 befestigt sein, die um das Paket 36 mit einer Vorspannung gewickelt worden sein können. Die Bandagen 72 können beispielsweise aus Glasfasern gebildet sein, die mit einem Kunstharz getränkt sein. In FIG 1 bis FIG 3 sind die Bandagen 72 nicht dargestellt.

Ein Außendurchmesser 74 der Endscheiben 58, 60 ist kleiner als ein Außendurchmesser 76 des Pakets 36. Durch den Unterschied der Durchmesser 74 und 76 ergibt sich ein Absatz 78. Durch Spannen der Bandagen 72 beim Aufwickeln wird hierdurch eine Anpresskraft auf die Flussleitelemente 16 und hiermit auch indirekt auf die Permanentmagneten 14 radial nach innen zur Welle 12 hin ausgeübt. In dem in FIG 4 gezeigten Beispiel sind zwei Endscheiben 58, 60 verwendet.

Die Endscheiben 58, 60 können auch weitere (nicht dargestellte) Befestigungselemente zum Anbringen von Wuchtmassen für den Rotor 10 aufweisen.

Obwohl bei dem Rotor 10 der magnetisch aktive Teil, d.h. das Paket 36, ausschließlich durch Kleben zusammengefügt ist, ist der Rotor 10 dennoch magnetisch sehr streuungsarm. Durch Abschrägungen 80 im Bereich der Auflageflächen 42 werden zusätzlich Feldspitzen des aus den Flussleitelementen 16 austretenden bzw. eintretenden Magnetfelds vermieden.

Insgesamt ist gezeigt, wie durch die Kombination aus geklebten Strukturen und hochfesten Bandagenelementen sowie durch die Befestigung mit mindestens einer Endscheibe und durch das mittels der Endscheiben ermöglichte Pressen der Permanentmagneten 14 und durch das indirekte Pressen über die Flussleitelemente 16 mittels der Bandagen der Motor besonders robust und damit auch in leistungsstarken Motoren einsetzbar gemacht wird. Der segmentweise Aufbau und die Verbindung der Segmente durch Kleben ermöglicht dennoch eine kostengünstige Herstellung.

## Patentansprüche

1. Rotor (10) mit Permanenterregung, welcher für die Permanententerregung eine Mehrzahl von Permanentmagneten (14) aufweist, die um eine Welle (12) des Rotors (10) in Umfangsrichtung (26) angeordnet sind, wobei zum Führen eines magnetischen Flusses der Permanentmagneten (14) eine Flussleiteinrichtung vorgesehen ist, und wobei die Permanentmagneten (14) an der Welle (12) selbst mittels einer Klebeverbindung (20) befestigt sind und die Flussleiteinrichtung eine Mehrzahl von weichmagnetischen Flussleitelementen (16) umfasst, die jeweils zwischen zweien der Permanentmagneten (14) an diesen angeklebt sind, **dadurch gekennzeich**- **net**, dass die Flussleitelemente (16) nur mittelbar über die Permanentmagneten (14) an der Welle (12) gehalten sind und die Permanentmagneten (14) über die Flussleitelemente (16) mit einer radial nach Innen zur Welle (12) hin wirkenden Anpresskraft beaufschlagt sind, wobei die Anpresskraft a) durch Schellen erzeugt ist oder b) durch Bandagen erzeugt ist, die an radial außen liegenden Oberflächen der Flussleitelemente angeordnet sind.

2. Rotor (10) nach Anspruch 1, wobei der Rotor (10) senkrecht zu seiner Rotationsachse (18) einen Querschnitt aufweist, bei welchem die Permanentmagneten (14) sternförmig an der Welle (12) und die Flussleitelemente (16) keilförmig zwischen den Permanentmagneten (14) angeordnet sind.

3. Rotor (10) nach Anspruch 1 oder 2, wobei bei zumindest einem der Permanentmagneten (14), bevorzugt bei allen Permanentmagneten (14), eine Magnetisierung (24) bezogen auf eine Rotationsachse (18) des Rotors (10) in Umfangsrichtung (26) weist.

4. Rotor (10) nach einem der vorhergehenden Ansprüche, wobei eine Klebeschicht (22) zwischen den Flussleitelementen (16) und den Permanentmagneten (14) in Umfangsrichtung (26) jeweils eine Dicke (40) von 0,05 mm bis 0,25 mm aufweist.

5. Rotor (10) nach einem der vorhergehenden Ansprüche, wobei zumindest eines der Flussleitelemente (16) eine das Flussleitelement (16) in radialer Richtung (28) begrenzende Oberfläche (30,32) aufweist, die in Umfangsrichtung (26) eine Krümmung mit einem Krümmungsradius (52) aufweist, der kleiner als ein Hüllkreisradius (48) eines Hüllkreises (46) ist, welcher einen maximalen Außenumfang des Rotors (10) in Umfangsrichtung (26) beschreibt, wobei der Krümmungsradius (52) insbesondere in einem Bereich zwischen 50 und 100 Prozent des Hüllkreisradius (48) liegt.

6. Rotor (10) nach einem der vorhergehenden Ansprüche, wobei zumindest ein Flussleitelement (16) zumindest einen Permanentmagneten (14) radial überdeckt und in dem Überdeckungsbereich (42) den Permanentmagneten (14) berührt.

7. Rotor (10) nach einem der vorhergehenden Ansprüche, wobei eine Dicke (38) der Klebeverbindung (20) der Permanentmagneten (14) mit der Welle (12) in radialer Richtung (28) jeweils kleiner als 0,5 mm ist und ein Toleranzfeld von weniger als 0,06 mm aufweist.

8. Rotor (10) nach einem der vorhergehenden Ansprüche, wobei der Rotor (10) an zumindest einer Stirnseite (54, 56) eine Endscheibe (58,60) aufweist, welche die Welle (12) umgibt und welche a) Laschen (62) aufweist, durch welche jeweils ein Permanentmagnet (14) an die Welle (12) gepresst ist, oder b) an der Stirnseite (54,56) angeklebt ist.

9. Rotor (10) nach Anspruch 8, wobei ein Durchmesser (74) der Endscheibe (58,60) kleiner als ein Durchmesser (76) des Pakets (36) aus Flussleitelementen (16) und Permanentmagneten (14) ist und wobei die Bandagen (72) gemäß Anspruch 1, Alternative b) an den Endscheiben (58,60) befestigt sind.

10. Rotor (10) nach einem der vorhergehenden Ansprüche, wobei der Rotor (10) Bandagen (72) aufweist, die an radial außen liegenden Oberflächen (30,32) der Flussleitelemente (16) angeordnet sind, wobei die Bandagen (72) Glasfasern umfassen.

11. Rotor (10) nach einem der vorhergehenden Ansprüche, wobei eine Anzahl von an einer Außenseite (30,32) des Rotors (10) ausgebildeter magnetischer Pole (34) größer als 6 ist.

12. Rotor (10) nach einem der vorhergehenden Ansprüche, wobei die Permanentmagneten (14) Ferritmagneten sind.

13. Elektrische Maschine mit einem Rotor (10) nach einem der vorhergehenden Ansprüche, wobei die elektrische Maschine bevorzugt als Synchronmaschine oder als Servomotor ausgebildet ist und insbesondere als Antrieb eines elektrisch angetriebenen Personenkraftwagens ausgelegt ist.

14. Verfahren zu Herstellen eines Rotors (10) gemäß einem der Ansprüche 1 bis 12, umfassend die Schritte:
- Ankleben von Permanentmagneten (14) an eine Welle (12) des Rotors (10),
- Anordnen von Flussleitelementen (16) in Zwischenräumen zwischen den Permanentmagneten (14);
- Ankleben der Flussleitelemente (16) an die Permanentmagneten (14)
**dadurch gekennzeichnet, dass**
die Flussleitelemente (16) nur mittelbar über die Permanentmagneten (14) an der Welle (12) gehalten werden und die Permanentmagneten (14) über die Flussleitelemente (16) mit einer radial nach Innen zur Welle (12) hin wirkenden Anpresskraft beaufschlagt werden, wobei die Anpresskraft a) durch Schellen erzeugt wird oder b) durch Bandagen erzeugt wird, die an radial außen liegenden Oberflächen der Flussleitelemente angeordnet werden.

## Claims

1. Rotor (10) having permanent excitation, which for the purposes of permanent excitation has a plurality of permanent magnets (14) arranged around a shaft (12) of the rotor (10) in the circumferential direction (26), wherein a flux conducting device is provided for conducting a magnetic flux of the permanent magnets (14), and wherein the permanent magnets (14) are attached to the shaft (12) itself by means of an adhesive bond (20) and the flux conducting device comprises a plurality of soft-magnetic flux conducting elements (16), each of which is arranged between two of the permanent magnets (14) and adhesively bonded thereto, **characterised in that** the flux conducting elements (16) are held in place only indirectly on the shaft (12) by way of the permanent magnets (14) and a contact force acting radially inward toward the shaft (12) is applied to the permanent magnets (14) by way of the flux conducting elements (16), wherein the contact force a) is generated by means of brackets or b) is generated by means of braces, which are arranged at radially outlying surfaces of the flux conducting elements.

2. Rotor (10) according to claim 1, wherein the rotor (10) has a cross-section perpendicular to its axis of rotation (18) in which the permanent magnets (14) are arranged in a star shape on the shaft (12) and the flux conducting elements (16) are arranged in a wedge shape between the permanent magnets (14).

3. Rotor (10) according to claim 1 or 2, wherein in the case of at least one of the permanent magnets (14), preferably in the case of all of the permanent magnets (14), a magnetisation (24) points in the circumferential direction (26) referred to an axis of rotation (18) of the rotor (10).

4. Rotor (10) according to one of the preceding claims, wherein an adhesive layer (22) between the flux conducting elements (16) and the permanent magnets (14) in the circumferential direction (26) has in each case a thickness (40) of 0.05 mm to 0.25 mm.

5. Rotor (10) according to one of the preceding claims, wherein at least one of the flux conducting elements (16) has a surface (30,32) which limits the flux conducting element (16) in the radial direction (28) and has a curvature in the circumferential direction (26) with a curvature radius (52) that is smaller than an enveloping circle radius (48) of an enveloping circle (46) which describes a maximum outer circumference of the rotor (10) in the circumferential direction (26), wherein the curvature radius (52) lies in particular in a range between 50 and 100 percent of the enveloping circle radius (48).

6. Rotor (10) according to one of the preceding claims, wherein at least one flux conducting element (16) radially covers at least one permanent magnet (14) and touches the permanent magnet (14) in the covering zone (42).

7. Rotor (10) according to one of the preceding claims, wherein a thickness (38) of the adhesive bond (20) of the permanent magnets (14) to the shaft (12) is in each case less than 0.5 mm in the radial direction (28) and has a tolerance field of less than 0.06 mm.

8. Rotor (10) according to one of the preceding claims, wherein at at least one front face (54, 56) the rotor (10) has an end plate (58,60) which surrounds the shaft (12) and which a) has straps (62) by means of which a permanent magnet (14) is in each case force-fitted to the shaft (12), or b) is adhesively bonded to the front face (54, 56).

9. Rotor (10) according to claim 8, wherein a diameter (74) of the end plate (58,60) is smaller than a diameter (76) of the package (36) composed of flux conducting elements (16) and permanent magnets (14) and wherein the braces (72) according to claim 1, alternative b) are attached to the end plates (58,60).

10. Rotor (10) according to one of the preceding claims, wherein the rotor (10) has braces (72) which are arranged at radially outlying surfaces (30,32) of the flux conducting elements (16), the braces (72) including reinforced glass fibres.

11. Rotor (10) according to one of the preceding claims, wherein a number of magnetic poles (34) embodied on an outside face (30,32) of the rotor (10) is greater than 6.

12. Rotor (10) according to one of the preceding claims, wherein the permanent magnets (14) are ferrite magnets.

13. Electric machine having a rotor (10) according to one of the preceding claims, wherein the electric machine is preferably embodied as a synchronous machine or as a servomotor and is configured in particular as a drive of an electrically driven passenger vehicle.

14. Method for manufacturing a rotor (10) according to one of claims 1 to 12, comprising the steps of:
- adhesively bonding permanent magnets (14) to a shaft (12) of the rotor (10),
- arranging flux conducting elements (16) in spaces between the permanent magnets (14);
- adhesively bonding flux conducting elements (16) to the permanent magnets (14)
**characterised in that** the flux conducting elements (16) are held in place only indirectly on the shaft (12) by way of the permanent magnets (14) and a contact force acting radially inward toward the shaft (12) is applied to the permanent magnets (14) by way of the flux conducting elements (16), wherein the contact force a) is generated by means of brackets or b) is generated by means of braces, which are arranged at radially outlying surfaces of the flux conducting elements.

## Revendications

1. Rotor ( 10 ) à excitation permanente, qui, pour l'excitation permanente, a une multiplicité d'aimants ( 14 ) permanents, qui sont disposés dans la direction ( 26 ) périphérique autour d'un arbre ( 12 ) du rotor ( 10 ), dans lequel il est prévu, pour le guidage d'un flux magnétique des aimants ( 14 ) permanents, un dispositif de guidage du flux et dans lequel les aimants ( 14 ) permanents sont fixés sur l'arbre ( 12 ) soi-même au moyen d'un collage ( 20 ) et le dispositif de guidage du flux comprend une multiplicité d'éléments ( 16 ) de guidage du flux à magnétisme doux, qui sont collés respectivement aux aimants ( 14 ) permanents entre deux de ceux-ci, **caractérisé en ce que** les éléments ( 16 ) de guidage du flux ne sont maintenus sur l'arbre ( 12 ) qu'indirectement par l'intermédiaire des aimants ( 14 ) permanents et les aimants ( 14 ) permanents sont soumis, par les éléments ( 16 ) de guidage du flux, à une force de pression agissant radialement en directement de l'intérieur vers l'arbre ( 12 ), la force de pression a) étant produite par des colliers ou b) étant produite par des bandages, qui sont disposés sur des surfaces, se trouvant à l'extérieur radialement, des éléments de guidage du flux.

2. Rotor ( 10 ) suivant la revendication 1, dans lequel le rotor a, perpendiculairement à son axe ( 18 ) de rotation, une section transversale, dans laquelle les aimants ( 14 ) permanents sont disposés en forme d'étoile sur l'arbre ( 12 ) et les éléments ( 16 ) de guidage du flux sont disposés en forme de coin entre les aimants ( 14 ) permanents.

3. Rotor ( 10 ) suivant la revendication 1 ou 2, dans lequel, pour au moins l'un des aimants ( 14 ) permanents, de préférence pour tous les aimants ( 14 ) permanents, une aimantation ( 24 ) est dirigée, rapporté à un axe ( 18 ) de rotation du rotor ( 10 ), dans la direction ( 26 ) périphérique.

4. Rotor ( 10 ) suivant l'une des revendications précédentes, dans lequel une couche ( 22 ) de colle entre les éléments ( 16 ) de guidage du flux et les aimants ( 14 ) permanents a, dans la direction ( 26 ) périphérique, respectivement une épaisseur ( 40 ) de 0,05 mm à 0,25 mm.

5. Rotor ( 10 ) suivant l'une des revendications précédentes, dans lequel au moins l'un des éléments ( 16 ) de guidage du flux a une surface ( 30, 32 ), qui délimite l'élément ( 16 ) de guidage du flux dans la direction ( 28 ) radiale et qui a, dans la direction ( 26 ) périphérique, une courbure ayant un rayon ( 52 ) de courbure, qui est plus petit qu'un rayon ( 48 ) d'un cercle ( 46 ) enveloppe, qui circonscrit un pourtour extérieur maximum du rotor ( 10 ) dans la direction ( 26 ) périphérique, le rayon ( 52 ) de courbure étant, notamment, dans une plage comprise entre 50 et 100 pour-cent du rayon ( 48 ) du cercle enveloppe.

6. Rotor ( 10 ) suivant l'une des revendications précédentes, dans lequel au moins un élément ( 16 ) de guidage du flux recouvre radialement au moins un aimant ( 14 ) permanent et touche l'aimant ( 14 ) permanent dans la zone ( 42 ) de recouvrement.

7. Rotor ( 10 ) suivant l'une des revendications précédentes, dans lequel une épaisseur ( 38 ) du collage ( 20 ) des aimants ( 14 ) permanents à l'arbre ( 12 ), dans la direction ( 28 ) radiale, est plus petite respectivement que 0,5 mm et a un champ de tolérance de moins de 0,06 mm.

8. Rotor ( 10 ) suivant l'une des revendications précédentes, dans lequel le rotor ( 10 ) a, sur au moins un côté ( 54, 56 ) frontal, un disque ( 58, 60 ) d'extrémité, qui entoure l'arbre ( 12 ) et qui a) a des pattes ( 62 ), par lesquelles respectivement un aimant ( 14 ) permanent est pressé sur l'arbre ( 12 ) ou b) est collé au côté ( 54, 56 ) frontal.

9. Rotor ( 10 ) suivant la revendication 8, dans lequel un diamètre ( 74 ) du disque ( 58, 60 ) d'extrémité est plus petit qu'un diamètre ( 76 ) du paquet ( 36 ) composé d'éléments ( 16 ) de guidage de flux et d'aimants ( 14 ) permanents et dans lequel les bandages ( 72 ) suivant la revendication 1 dans la variante b) sont fixés sur les disques ( 58, 60 ) d'extrémité.

10. Rotor ( 10 ) suivant l'une des revendications précédentes, dans lequel le rotor ( 10 ) a des bandages ( 72 ), qui sont disposés sur des surfaces ( 30, 32 ), se trouvant à l'extérieur radialement, des éléments ( 16 ) de guidage du flux, les bandages ( 72 ) comprenant des fibres de verre.

11. Rotor ( 10 ) suivant l'une des revendications précédentes, dans lequel un nombre de pôles ( 34 ) magnétiques constitués sur un côté ( 30, 32 ) de rotor ( 10 ) est plus grand que 6.

12. Rotor ( 10 ) suivant l'une des revendications précédentes, dans lequel les aimants ( 14 ) permanents sont des aimants de ferrite.

13. Machine électrique ayant un rotor ( 10 ) suivant l'une des revendications précédentes, la machine électrique étant, de préférence, sous la forme d'une machine synchrone ou d'un servomoteur et étant conçue, notamment, comme dispositif de traction d'une voiture électrique.

14. Procédé de fabrication d'un rotor ( 10 ) suivant l'une des revendications 1 à 12, comprenant les stades :
- collage d'aimants ( 14 ) permanents à un arbre ( 12 ) du rotor ( 10 ),
- montage d'éléments ( 16 ) de guidage de flux dans les intervalles entre les aimants ( 14 ) permanents,
- collage d'éléments ( 16 ) de guidage du flux sur les aimants ( 14 ) permanents,
**caractérisé en ce que**
on ne maintient les éléments ( 16 ) de guidage du flux sur l'arbre ( 12 ) qu'indirectement par l'intermédiaire des aimants ( 14 ) permanents et on soumet les aimants ( 14 ) permanents par l'intermédiaire des éléments ( 16 ) de guidage du flux à une force de pression s'appliquant radialement vers l'intérieur en direction de l'arbre ( 12 ), la force de pression a) étant produite par des colliers ou b) étant produite par des bandages, qui sont disposés sur des surfaces, se trouvant à l'extérieur radialement, des éléments de guidage du flux.
